# EUROPÄISCHE PATENTSCHRIFT

(11) **EP 2 654 155 B1**
(45) Veröffentlichungstag und Bekanntmachung des Hinweises auf die Patenterteilung: **13.06.2018**
(21) Anmeldenummer: 13154377.9
(22) Anmeldetag: 07.02.2013
(51) Int. Cl.: H02H 7/122, B62D 5/04, G05B 9/03, G06F 11/14, G06F 11/20, H02M 1/36, H02H 7/08

(54) **Stromrichter, sowie Verfahren zum Betreiben eines Stromrichters**
Power converter, and method for operating a power converter
Convertisseur de courant, tout comme procédé destiné au fonctionnement d'un convertisseur de courant

(30) Priorität: 17.04.2012 DE 102012103356
(43) Veröffentlichungstag der Anmeldung: 23.10.2013
(73) Patentinhaber: SEMIKRON Elektronik GmbH & Co. KG, 90431 Nürnberg (DE)
(72) Erfinder: Hettrich, Sebastian, 91126 Schwabach (DE); Kraus, Jochen, 90419 Nürnberg (DE)

(56) Entgegenhaltungen:
- EP-A1- 1 211 774
- EP-A2- 2 364 897
- US-A- 5 490 072
- US-A1- 2002 177 932
- US-A1- 2009 072 986

## Beschreibung

Die vorliegende Erfindung liegt auf dem Gebiet der Leistungselektronik und betrifft einen Stromrichter zum Speisen einer elektrischen Maschine mit einer Betriebsspannung, sowie ein Verfahren zum Betreiben eines solchen Stromrichters.

### Stand der Technik

In Kraftfahrzeugen werden zunehmend elektrische Maschinen zum Fahrzeugantrieb eingesetzt. Im Hinblick auf die erforderliche Antriebskraft müssen sie mit einer im Vergleich zum Bordnetz erheblich höheren Betriebsspannung von beispielsweise 600 bis 900 Volt betrieben werden, die von einer Gleichstromquelle bereitgestellt wird. In der Regel benötigen elektrische Maschinen zum Fahrzeugantrieb mehrere Wechselstromphasen, die durch einen Stromrichter (z.B. 3-Phasen-Wechselrichter) erzeugt werden. Durch eine Variation von Polarität und Frequenz der erzeugten Wechselspannung können Drehrichtung und Drehzahl bedarfsgerecht an die jeweilige Fahrsituation angepasst werden.

Stromrichter verfügen typischer Weise über eine Brückenschaltung mit einer Mehrzahl paralleler Halbbrücken zur Erzeugung der Wechselstromphasen. Meist ist ein Spannungszwischenkreis mit einem Zwischenkreiskondensator zur Speisung der Brückenschaltung vorgesehen, wodurch eine Spannungsstützung für den Betrieb der elektrischen Maschine erreicht werden kann. In einer Halbbrücke sind zwei Leistungsschalter mit ihren Laststrompfaden in einer Reihenschaltung angeordnet, wobei meist eine Freilaufdiode antiparallel zu den Leistungsschaltern verschaltet ist. Bekannt ist es, einen solchen Leistungsschalter durch einen oder mehrere parallel verschaltete Leistungstransistoren auszubilden.

Eine Ansteuerung der Brückenschaltung erfolgt durch eine Steuerschaltung, welche in der Regel in einen primärseitigen Schaltungsteil (Niedervoltseite) und einen sekundärseitigen Schaltungsteil (Hochvoltseite) unterteilt ist, wobei die beiden Schaltungsteile durch eine galvanisch trennende Übertragungseinrichtung miteinander verbunden sind. Eine galvanisehe Trennung der beiden Schaltungsteile kann beispielsweise durch Optokoppler, Impulsübertrager oder mittels integrierter Schaltungstechnik erfolgen, was dem Fachmann an sich bekannt ist.

Der primärseitige Schaltungsteil der Steuerschaltung umfasst einen Steuerlogikbaustein zur Erzeugung von Steuersignalen zur Ansteuerung der Leistungsschalter. Der Steuerlogikbaustein ist zu diesem Zweck mit einer übergeordneten Steuereinrichtung verbunden, beispielsweise ein Motorsteuergerät eines Kraftfahrzeugs, das ein Anforderungssignal für einen Soll-Betriebszustand der elektrischen Maschine erzeugt und an den Steuerlogikbaustein überträgt.

Aus der EP 2 364 897 A2 ist eine elektrische Servolenkungssteuereinheit mit einer Steuereinheit bekannt, die basierend auf einem ersten und einem zweiten Drehmomentsignal Motorantriebssignale an eine Antriebsschaltung ausgibt, wobei die Antriebsschaltung dafür ausgelegt ist, einen Motor anzutreiben, der ein unterstützendes Drehmoment erzeugt, wobei das erste und das zweite Drehmomentsignal von mindestens einem Drehmomentsensor ausgegeben werden, der verwendet wird, um eine Lenkkraft zu detektieren und mit einen Drehmomentsensor-Anomaliedetektor, der basierend auf dem ersten und dem zweiten Drehmomentsignal eine Anomalie des Drehmomentsensors detektiert und mit einem Detektor für ein überhöhtes Drehmoment, der unter Verwendung des ersten oder des zweiten Drehmomentsignals ein Drehmoment ermittelt und ein Motorhaltesignal ausgibt, wenn das Drehmoment größer als ein erster Schwellwert ist.

Aus der US 2009 / 0072986 A1 ist eine Überwachungseinrichtung für eine Antriebseinrichtung bekannt, wobei die Überwachungseinrichtung zur Überwachung einer Bewegung der Antriebseinrichtung vorgesehen ist, wobei die Überwachungseinrichtung einen ersten Geber und einen zweiten Geber aufweist, der zur Überwachung des ersten Gebers vorgesehen ist, wobei der erste Geber mittels einer Kupplung mit einer Motorwelle mechanisch gekuppelt ist.

Nun kann nicht ausgeschlossen werden, dass während des Betriebs der elektrischen Maschine am Steuerlogikbaustein eine Funktionsstörung auftritt, beispielsweise wenn der Steuerlogikbaustein komplett oder teilweise ausfällt oder eine Fehlfunktion, beispielsweise eine fehlerhafte Steuersignalerzeugung, vorliegt. Insbesondere bei einer Fehlfunktion ist möglich, dass eine nicht dem Soll-Betriebszustand entsprechende Ansteuerung der elektrischen Maschine erfolgt. Schlimmstenfalls erfolgt eine gegensinnige Ansteuerung, beispielsweise durch Einstellen einer Drehzahlerhöhung obgleich eine Drehzahlverringerung von der übergeordneten Steuereinrichtung angefordert wurde. Dient die elektrische Maschine zum Antrieb eines Kraftfahrzeugs kann eine solche Fehlfunktion zu einer erheblichen Beeinträchtigung der Verkehrssicherheit führen.

Demgegenüber besteht die Aufgabe der vorliegenden Erfindung darin, herkömmliche Stromrichter so weiterzubilden, dass die Sicherheit beim Betrieb der elektrischen Maschine verbessert ist. Diese und weitere Aufgaben werden nach dem Vorschlag der Erfindung durch einen Stromrichter und ein Verfahren zum Betreiben eines Stromrichters mit den Merkmalen der nebengeordneten Patentansprüche 1 und 7 gelöst. Vorteilhafte Ausgestaltungen der Erfindung sind durch die Merkmale der Unteransprüche angegeben.

Der Ausdruck "Stromrichter" bezieht sich auf an sich bekannte Vorrichtungen zur Wandlung von elektrischer Energie. Stromrichter in diesem Sinne sind insbesondere ein- oder mehrphasige Gleichstrom/Wechselstrom-Wandler (DC/AC-Wandler) bzw. Wechselrichter. Der Ausdruck "verbunden" bzw. "angeschlossen" bezieht sich auf eine elektrische Verbindung zum Übertragen elektrischer Signale. Der Ausdruck "eingerichtet" bezieht sich auf eine programm- und/oder schaltungstechnische Einrichtung eines Logikbauteils.

Der erfindungsgemäße Stromrichter dient zum Speisen einer elektrischen Maschine mit einer Betriebsspannung. Wie üblich umfasst der Stromrichter eine oder mehrere Halbbrücken mit Leistungsschaltern zum Erzeugen von Wechselstromphasen, wobei die Leistungsschalter durch eine Steuerschaltung ansteuerbar sind. Typischer Weise, jedoch nicht zwingend, umfasst der Stromrichter einen Zwischenkreis mit Zwischenkreiskondensator zur Bereitstellung einer den Halbbrücken anliegenden Zwischenkreisspannung. In einer Halbbrücke sind zwei Leistungsschalter mit ihren Laststrompfaden in einer Reihenschaltung angeordnet, wobei ein erster Leistungsschalter bzw. TOP-Leistungsschalter mit seinem Laststromeingang an ein oberes bzw. höheres Potential (DC+) und ein zweiter Leistungsschalter bzw. BOT-Leistungsschalter mit seinem Laststromausgang an ein unteres bzw. niedrigeres Potential (DC-) angeschlossen ist. Ein Mittelabgriff zwischen TOP-und BOT-Leistungsschalter bildet einen Lastausgang der Halbbrücke zur Verbindung der erzeugten Wechselstromphase mit einer elektrischen Last. Solche Leistungsschalter sind typischer Weise zum Leiten von elektrischen Strömen von mehreren hundert Ampere und Sperren von Spannungen bis ca. 1000 Volt ausgelegt. In der Praxis werden hierfür meist Bipolartransistoren mit isolierter Gate-Elektrode (IBGT) mit einer Kollektor-Elektrode als Laststromeingang, einer Emitter-Elektrode als Laststromausgang und einer Gate-Elektrode als Steuereingang, oder Feldeffekttransistoren (FET), insbesondere Metalloxid-Feldeffekttransistoren (MOSFET), mit einer Drain-Elektrode als Laststromeingang, einer Source-Elektrode als Laststromausgang und einer Gate-Elektrode als Steuereingang eingesetzt.

Der erfindungsgemäße Stromrichter umfasst eine Steuerschaltung zur Ansteuerung der Leistungsschalter, welche in einen primärseitigen Schaltungsteil und einen sekundärseitigen Schaltungsteil unterteilt ist, wobei der primärseitige Schaltungsteil (Niedervoltseite) und der sekundärseitige Schaltungsteil (Hochvoltseite) durch eine galvanisch trennende Übertragungseinrichtung galvanisch getrennt, jedoch schaltungstechnisch miteinander verbunden sind.

Die Steuerschaltung, insbesondere der primärseitige Schaltungsteil der Steuerschaltung, umfasst einen ersten Logikbaustein (Mikrochip bzw. Mikrokontroller), im Weiteren als "Steuerlogikbaustein" bezeichnet, zum Erzeugen von Steuersignalen zur Ansteuerung der Leistungsschalter. Wie üblich werden die Steuersignale im sekundärseitigen Schaltungsteil durch eine Treiberschaltung in Steuerspannungen zum Ein- oder Ausschalten der Leistungsschalter umgesetzt. Wie hier und im Weiteren verwendet, bezieht sich der Ausdruck "Einschalten" im Zusammenhang mit einem Leistungsschalter auf das Schalten eines Leistungsschalters in Durchlasszustand, in dem der Leistungs- bzw. Laststrompfad elektrisch leitend ist, der Ausdruck "Ausschalten" auf das Schalten des Leistungsschalters in Sperrzustand, in dem der Leistungs- bzw. Laststrompfad elektrisch isolierend ist.

Im erfindungsgemäßen Stromrichter ist an den Steuerlogikbaustein eine Datenleitung, im Weiteren als "erste Anforderungsleitung" bezeichnet, für ein Anforderungssignal angeschlossen. Das Anforderungssignal wird von einer übergeordneten Steuereinrichtung der elektrischen Maschine erzeugt und über die erste Anforderungsleitung an den Steuerlogikbaustein übertragen. Das Anforderungssignal gibt einen Soll-Betriebszustand der elektrischen Maschine vor, beispielsweise gegeben durch eine Drehmomentanforderung (Soll-Drehmoment) und eine Drehzahlanforderung (Soll-Drehzahl). Der Steuerlogikbaustein ist zu diesem Zweck durch die erste Anforderungsleitung mit der übergeordneten Steuereinrichtung verbunden. An den Steuerlogikbaustein sind weitere Datenleitungen, im Weiteren als "erste Sensorleitungen" bezeichnet, für erste Sensorsignale angeschlossen. Die ersten Sensorsignale ermöglichen die Bestimmung eines (momentanen) Ist-Betriebszustands der elektrischen Maschine, beispielsweise gegeben durch ein momentanes Ist-Drehmoment und eine momentane Ist-Drehzahl. Der Steuerlogikbaustein ist zu diesem Zweck durch die ersten Sensorleitungen mit Sensoren verbunden, welche der Erfassung von Messwerten von Messgrößen der elektrischen Maschine oder des Stromrichters dienen. Hierbei ist der Steuerlogikbaustein so eingerichtet, dass auf Basis der ersten Sensorsignale ein Ist-Betriebszustand der elektrischen Maschine ermittelt und auf Basis des Ist-Betriebszustands Steuersignale für die Leistungsschalter zum Einstellen des Soll-Betriebszustands der elektrischen Maschine erzeugt werden können.

Die Steuerschaltung, insbesondere der primärseitige Schaltungsteil der Steuerschaltung, umfasst weiterhin einen vom ersten Logikbaustein verschiedenen, zweiten Logikbaustein (Mikrochip bzw. Mikrokontroller), im Weiteren als "Kontrolllogikbaustein" bezeichnet, zum Erzeugen eines Fehlersignals, im Weiteren als "Kontrolllogik-Fehlersignal" bezeichnet, bei Fehlfunktion und/oder Komplett- oder Teilausfall des Steuerlogikbausteins. An den Kontrolllogikbaustein ist eine von der ersten Anforderungsleitung zumindest abschnittsweise verschiedene Datenleitung, im Weiteren als "zweite Anforderungsleitung" bezeichnet, für das von der übergeordneten Steuereinrichtung der elektrischen Maschine erzeugte Anforderungssignal angeschlossen. Der Kontrolllogikbaustein ist zu diesem Zweck durch die zweite Anforderungsleitung mit der übergeordneten Steuereinrichtung direkt, d.h. ohne Zwischenschaltung des Steuerlogikbausteins, verbunden. Das von der übergeordneten Steuereinrichtung erzeugte Anforderungssignal wird über die zweite Anforderungsleitung an den Kontrolllogikbaustein übertragen. An den Kontrolllogikbaustein sind weitere Datenleitungen, im Weiteren als "zweite Sensorleitungen" bezeichnet, für zweite Sensorsignale angeschlossen. Wie die ersten Sensorsignale ermöglichen auch die zweiten Sensorsignale die Bestimmung eines (momentanen) Ist-Betriebszustands der elektrischen Maschine. In der Regel handelt es sich bei den ersten Sensorsignalen und den zweiten Sensorsignalen um Messwerte derselben Messgrößen. Der Kontrolllogikbaustein ist zu diesem Zweck durch die zweiten Sensorleitungen mit Sensoren verbunden, welche der Erfassung von Messwerten von Messgrößen der elektrischen Maschine oder des Stromrichters dienen. In einer möglichen Ausgestaltung ist für eine oder mehrere Messgrößen nur ein einziger Sensor vorgesehen, dessen Ausgangssignal als erstes Sensorsignal dem Steuerlogikbaustein und zugleich als zweites Sensorsignal dem Kontrolllogikbaustein anliegt. In einer alternativen Ausgestaltung sind für eine oder mehrere Messgrößen jeweils zwei redundante Sensoren vorgesehen, wobei das Ausgangssignal des einen Sensors als erstes Sensorsignal dem Steuerlogikbaustein und das Ausgangssignal des anderen Sensors als zweites Sensorsignal dem Kontrolllogikbaustein anliegt. Hierbei ist der Kontrolllogikbaustein so eingerichtet, dass auf Basis der zweiten Sensorsignale ein Ist-Betriebszustand der elektrischen Maschine ermittelt, ein Abgleich zwischen Ist-Betriebszustand und Soll-Betriebszustand durchgeführt und das Kontrolllogik-Fehlersignal erzeugt werden kann. Eine Erzeugung des Kontrolllogik-Fehlersignals erfolgt, wenn der Ist-Betriebszustand von dem durch das Anforderungssignal vorgegebenen Soll-Betriebszustand abweicht. Beispielsweise wird zu diesem Zweck die erste Fehlerleitung mit einem vorgegebenen bzw. vorgebbaren Logikpegel (z.B. High) beaufschlagt, wohingegen im Nicht-Fehlerfall der andere Logikpegel (z.B. Low) anliegt. In der Regel erfolgt ein Abgleich des Soll-Betriebszustands mit einem nach Ablauf einer vorgebbaren bzw. vorgegebenen Warte- bzw. Einstellzeit nach Erzeugen der Steuersignale vorliegenden Ist-Betriebszustand der elektrischen Maschine, da die Einstellung des Soll-Betriebszustands aufgrund der Trägheit der elektrischen Maschine einen gewissen Zeitraum in Anspruch nimmt. Die Einstellzeit hängt von der elektrischen Maschine ab, kann jedoch anhand von Erfahrungswerten problemlos ermittelt werden.

Die Steuerschaltung, insbesondere der primärseitige Schaltungsteil der Steuerschaltung, umfasst weiterhin wenigstens einen programmierbaren dritten Logikbaustein (Mikrochip bzw. Mikrokontroller), im Weiteren als "Sicherheitslogikbaustein" bezeichnet, zum Modifizieren der Steuersignale auf Basis des Kontrolllogik-Fehlersignals. Der wenigstens eine Sicherheitslogikbaustein ist zu diesem Zweck durch eine Datenleitung, im Weiteren als "erste Fehlerleitung" bezeichnet, an den Kontrolllogikbaustein angeschlossen, so dass das vom Kontrolllogikbaustein erzeugte Kontrolllogik-Fehlersignal dem Sicherheitslogikbaustein anliegt. Der wenigstens eine Sicherheitslogikbaustein ist zu diesem Zweck durch eine Datenleitung, im Weiteren als "erste Fehlerleitung" bezeichnet, an den Kontrolllogikbaustein angeschlossen, so dass das vom Kontrolllogikbaustein erzeugte Kontrolllogik-Fehlersignal dem Sicherheitslogikbaustein anliegt. Entsprechend ist der Kontrolllogikbaustein so eingerichtet, dass das Kontrolllogik-Fehlersignal über die erste Fehlerleitung an den Sicherheitslogikbaustein übertragen werden kann. Weiterhin ist der Sicherheitslogikbaustein so eingerichtet, dass die vom Steuerlogikbaustein erzeugten Steuersignale auf Basis des vom Kontrolllogikbaustein erzeugten Kontrolllogik-Fehlersignals so modifiziert werden können, dass eine (weitere) Speisung der Maschine mit Betriebsspannung gestoppt wird.

In dem erfindungsgemäßen Stromrichter erfolgt somit eine Kontrolle der ordnungsgemäßen Funktion des Steuerlogikbausteins durch den Kontrolllogikbaustein. Ein Ausfall oder eine Fehlfunktion des Steuerlogikbausteins wird erkannt durch Abgleichen des durch das Anforderungssignal angeforderten Soll-Betriebszustands mit einem Ist-Betriebszustand der elektrischen Maschine, insbesondere nach Ablauf einer vorgebbaren Wartezeit nach Erzeugung der Steuersignale. Wird beim Abgleichen der Betriebszustände ein regelungstechnisch signifikanter Unterschied erkannt, so wird dies als Fehlfunktion oder Ausfall des Steuerlogikbausteins gewertet, mit der Folge, dass das Kontrolllogik-Fehlersignal erzeugt wird. Durch das Kontrolllogik-Fehlersignal werden die Steuersignale so modifiziert, dass die Speisung der elektrischen Maschine gestoppt wird.

Von besonderem Vorteil ist es, dass die Bestimmung des Ist-Betriebszustands durch den Kontrolllogikbaustein unabhängig vom Steuerlogikbaustein auf Basis der direkt (d.h. ohne Zwischenschaltung des Steuerlogikbausteins) zugeführten zweiten Sensorsignale erfolgt, so dass eine Fehlfunktion oder ein Ausfall des Steuerlogikbausteins die Bestimmung des Ist-Betriebszustands nicht beeinträchtigt. Zudem liegt dem Kontrolllogikbaustein das Anforderungssignal direkt (d.h. ohne Zwischenschaltung des Steuerlogikbausteins) an, so dass eine Fehlfunktion oder ein Ausfall des Steuerlogikbausteins den Abgleich der Betriebszustände durch den Kontrolllogikbaustein nicht beeinträchtigt. Eine Fehlfunktion oder ein Ausfall des Steuerlogikbausteins kann somit zuverlässig und sicher erkannt werden. Vorteilhaft ist auch die Erzeugung des Kontrolllogik-Fehlersignals durch den Kontrolllogikbaustein, so dass eine Fehlfunktion oder ein Ausfall des Steuerlogikbausteins die Erzeugung des Kontrolllogik-Fehlersignals nicht beeinträchtigt. Durch eine Modifikation der Steuersignale im Sicherheitslogikbaustein kann in besonders einfacher Weise zuverlässig und sicher in die Steuerung der Leistungsschalter eingegriffen werden, um die Versorgung mit Betriebsspannung zu stoppen, so dass die elektrische Maschine ausläuft und dadurch in einen sicheren Betriebszustand überführt wird. Somit kann die Betriebssicherheit der elektrischen Maschine erheblich verbessert werden.

Bei einer vorteilhaften Ausgestaltung des erfindungsgemäßen Stromrichters sind der Steuer- und Kontrolllogikbaustein durch eine Datenleitung, im Weiteren als "Steuerlogikleitung" bezeichnet, miteinander verbunden. Der Steuerlogikbaustein ist so eingerichtet, dass der ermittelte Ist-Betriebszustand und/oder die ersten Steuersignale an den Kontrolllogikbaustein übertragen werden können. Zudem ist der Kontrolllogikbaustein so eingerichtet, dass ein Abgleich des vom Steuerlogikbaustein ermittelten Ist-Betriebszustands mit dem vom Kontrolllogikbaustein ermittelten Ist-Betriebszustand und/oder der ersten Sensorsignale mit den zweiten Sensorsignalen erfolgen und das Kontrolllogik-Fehlersignal erzeugt werden kann, falls die Ist-Betriebszustände und/oder die ersten Sensorsignale von den zweiten Sensorsignalen abweichen. Auch durch diese Maßnahme kann eine Fehlfunktion oder ein Ausfall des Steuerlogikbausteins durch den Kontrolllogikbaustein erkannt und die Speisung der elektrischen Maschine gestoppt werden. In vorteilhafter Weise kann ein Fehler des Steuerlogikbausteins hierbei bereits vor Ablauf der Einstellzeit nach Erzeugen der Steuersignale erkannt werden. Die Betriebssicherheit der elektrischen Maschine im Fehlerfall kann dadurch noch weiter verbessert werden.

Beim erfindungsgemäßen Stromrichter sind der Steuerlogik- und Kontrolllogikbaustein durch die Steuerlogikleitung miteinander verbunden, wobei der Steuerlogikbaustein mit dem wenigstens einen Sicherheitslogikbaustein durch eine Datenleitung, im Weiteren als "zweite Fehlerleitung" bezeichnet, direkt (d.h. ohne Zwischenschaltung des Kontrolllogikbausteins) verbunden ist. Der Kontrolllogikbaustein ist so eingerichtet, dass der ermittelte Ist-Betriebszustand und/oder die zweiten Sensorsignale an den Steuerlogikbaustein übertragen werden können. Zudem ist der Steuerlogikbaustein so eingerichtet, dass ein vom Kontrolllogik-Fehlersignal unabhängiges Fehlersignal, im Weiteren als "Steuerlogik-Fehlersignal" bezeichnet, erzeugt und über die zweite Fehlerleitung übertragen werden kann, falls eine Signalübertragung durch den Kontrolllogikbaustein nicht erfolgt. Beispielsweise wird zu diesem Zweck die zweite Fehlerleitung mit einem vorgegebenen bzw. vorgebbaren Logikpegel (z.B. High) beaufschlagt, wohingegen im Nicht-Fehlerfall der andere Logikpegel (z.B. Low) anliegt. Weiterhin ist der Sicherheitslogikbaustein so eingerichtet, dass die Steuersignale auf Basis des Steuerlogik-Fehlersignals so modifiziert werden können, dass die Speisung der Maschine mit Betriebsspannung gestoppt wird. Durch die Maßnahme kann in vorteilhafter Weise eine Fehlfunktion oder ein Ausfall des Kontrolllogikbausteins durch den Steuerlogikbaustein erkannt und die Speisung der elektrischen Maschine gestoppt werden. Es erfolgt somit auch eine Überwachung des Kontrolllogikbausteins durch den Steuerlogikbaustein, wobei der Steuerlogikbaustein unabhängig vom Kontrolllogikbaustein auf den Sicherheitslogikbaustein zugreifen und das Steuerlogik-Fehlersignal übertragen kann. Dies ist durch den vom Kontrolllogikbaustein getrennten Sicherheitslogikbaustein möglich. Auch durch diese Maßnahme kann die Betriebssicherheit der elektrischen Maschine noch weiter verbessert werden.

Bei einer weiteren vorteilhaften Ausgestaltung des erfindungsgemäßen Stromrichters sind ein erster Sicherheitslogikbaustein für Steuersignale der TOP-Leistungsschalter und ein zweiter Sicherheitslogikbaustein für Steuersignale der BOT-Leistungsschalter vorgesehen. Die beiden Sicherheitslogikbausteine sind jeweils so eingerichtet, dass auf Basis des anliegenden Kontrolllogik- oder Steuerlogik-Fehlersignals die Speisung der elektrischen Maschine gestoppt wird. Durch diese Maßnahme kann die Betriebssicherheit der elektrischen Maschine noch weiter verbessert werden, da selbst dann noch ein Ansteuern der TOP- oder BOT-Leistungsschalter möglich ist, wenn einer der beiden Sicherheitslogikbausteine ausfällt, so dass die elektrische Maschine in einen sicheren Betriebszustand überführt werden kann.

Bei einer weiteren vorteilhaften Ausgestaltung des erfindungsgemäßen Stromrichters sind die beiden Sicherheitslogikbausteine miteinander verbunden. Zudem sind die beiden Sicherheitslogikbausteine jeweils so eingerichtet, dass ein wechselseitiger Austausch der TOP- bzw. BOT-Steuersignale erfolgt und diese gegebenenfalls geändert werden können, beispielsweise um einen Kurzschluss im Spannungszwischenkreis zu vermeiden. Die Betriebssicherheit des Stromrichters kann dadurch verbessert werden.

Die Erfindung erstreckt sich weiterhin auf eine elektrische Maschine mit einem erfindungsgemäßen Stromrichter zur Speisung mit einer Betriebsspannung.

Des Weiteren erstreckt sich die Erfindung auf ein Kraftfahrzeug mit einem Elektro- oder Hybridantrieb, das mit einer solchen elektrischen Maschine mit Stromrichter als Antriebsmaschine ausgerüstet ist.

Ferner erstreckt sich die Erfindung auf ein Verfahren zum Betreiben eines Stromrichters zum Speisen einer elektrischen Maschine mit einer Betriebsspannung. Der Stromrichter umfasst eine oder mehrere Halbbrücken mit Leistungsschaltern zum Erzeugen von Wechselstromphasen und kann insbesondere als erfindungsgemäßer Stromrichter ausgebildet sein. Das Verfahren umfasst die folgenden Schritte:
- Übertragen eines einen Soll-Betriebszustand der elektrischen Maschine vorgebenden Anforderungssignals sowie erster Sensorsignale an einen Steuerlogikbaustein;
- Ermitteln eines Ist-Betriebszustands der elektrischen Maschine auf Basis der ersten Sensorsignale durch den Steuerlogikbaustein;
- Erzeugen von Steuersignalen für die Leistungsschalter durch den Steuerlogikbaustein auf Basis des ermittelten Ist-Betriebszustands zum Einstellen des Soll-Betriebszustands,
- Übertragen des Anforderungssignals sowie zweiter Sensorsignale an einen Kontrolllogikbaustein;
- Ermitteln eines Ist-Betriebszustands der elektrischen Maschine auf Basis der zweiten Sensorsignale, insbesondere nach Ablauf einer vorgebbaren Warte- bzw. Einstellzeit nach Erzeugen der Steuersignale durch den Kontrolllogikbaustein;
- Erzeugen eines Kontrolllogik-Fehlersignals durch den Kontrolllogikbaustein, falls der vom Kontrolllogikbaustein ermittelte Ist-Betriebszustand vom Soll-Betriebszustand abweicht,
- Modifizieren der Steuersignale auf Basis des Kontrolllogik-Fehlersignals derart, dass die Speisung der Maschine mit einer Betriebsspannung gestoppt wird,
- Übertragen des vom Kontrolllogikbaustein ermittelten Ist-Betriebszustands und/oder der zweiten Sensorsignale vom Kontrolllogikbaustein an den Steuerlogikbaustein;
- Erzeugen eines vom Kontrolllogik-Fehlersignal unabhängigen Steuerlogik-Fehlersignals durch den Steuerlogikbaustein, falls eine Signalübertragung durch den Kontrolllogikbaustein nicht erfolgt;
- Modifizieren der Steuersignale auf Basis des Steuerlogik-Fehlersignals derart, dass eine Speisung der Maschine mit Betriebsspannung gestoppt wird.

Eine vorteilhafte Ausgestaltung des erfindungsgemäßen Verfahrens umfasst die folgenden Schritte:
- Übertragen des vom Steuerlogikbaustein ermittelten Ist-Betriebszustands und/oder der ersten Steuersignale vom Steuerlogikbaustein an den Kontrolllogikbaustein;
- Abgleichen des vom Kontrolllogikbaustein ermittelten momentanen Ist-Betriebszustands mit dem vom Steuerlogikbaustein ermittelten Ist-Betriebszustand und/oder der ersten Sensorsignale mit den zweiten Sensorsignalen durch den Kontrolllogikbaustein;
- Erzeugen des Kontrolllogik-Fehlersignals durch den Kontrolllogikbaustein, falls die Ist-Betriebszustände voneinander abweichen und/oder die ersten Sensorsignale von den zweiten Sensorsignalen abweichen.

Eine weitere vorteilhafte Ausgestaltung des erfindungsgemäßen Verfahrens umfasst die folgenden Schritte:
- Übertragen der Steuersignale an wenigstens einen Sicherheitslogikbaustein;
- Übertragen des Kontrolllogik- oder Steuerlogik-Fehlersignals (je nachdem welches Fehlersignal erzeugt wird) an den Sicherheitslogikbaustein;
- Modifizieren der Steuersignale auf Basis des Kontrolllogik- oder Steuerlogik-Fehlersignals im Sicherheitslogikbaustein.

Eine weitere vorteilhafte Ausgestaltung des erfindungsgemäßen Verfahrens umfasst die folgenden Schritte:
- Übertragen von Steuersignalen für mit einem höheren Potential verbundene TOP-Leistungsschalter an einen ersten Sicherheitslogikbaustein;
- Übertragen von Steuersignalen für mit einem niedrigeren Potential verbundene BOT-Leistungsschalter an einen zweiten Sicherheitslogikbaustein;
- Übertragen des Kontrolllogik- oder Steuerlogik-Fehlersignals (je nachdem welches Fehlersignal erzeugt wird) an die beiden Sicherheitslogikbausteine;
- Modifizieren der Steuersignale für die TOP-Leistungsschalter im ersten Sicherheitslogikbaustein auf Basis des Fehlersignals;
- Modifizieren der Steuersignale für die BOT-Leistungsschalter im zweiten Sicherheitslogikbaustein auf Basis des Kontrolllogik- oder Steuerlogik-Fehlersignals.

Bei einer weiteren vorteilhaften Ausgestaltung des erfindungsgemäßen Verfahrens werden die Steuersignale auf Basis des Kontrolllogik- oder Steuerlogik-Fehlersignals (je nachdem welches Fehlersignal erzeugt wird) derart modifiziert, dass entweder alle Leistungsschalter ausgeschaltet werden, oder alle mit einem höheren Potential verbundene TOP-Leistungsschalter ein- und zugleich alle mit einem niedrigeren Potential verbundene BOT-Leistungsschalter ausgeschaltet werden, oder alle mit einem höheren Potential verbundene TOP-Leistungsschalter aus- und alle mit einem niedrigeren Potential verbundene BOT-Leistungsschalter eingeschaltet werden.

Bei einer weiteren vorteilhaften Ausgestaltung des erfindungsgemäßen Verfahrens werden die ersten Sensorsignale von Sensoren erzeugt, welche verschieden sind von Sensoren, welche die zweiten Sensorsignale erzeugen.

Die mit dem erfindungsgemäßen Verfahren und deren Ausgestaltungen erreichten Vorteile wurden bereits im Zusammenhang mit dem erfindungsgemäßen Stromrichter beschrieben, so dass zur Vermeidung von Wiederholungen auf die dortigen Ausführungen verwiesen wird.

Es versteht sich, dass die verschiedenen Ausgestaltungen der Erfindung einzeln oder in beliebigen Kombinationen realisiert sein können, um Verbesserungen herkömmlicher Stromrichter und deren Betriebsverfahren zu erreichen. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Ausführungsbeispiel

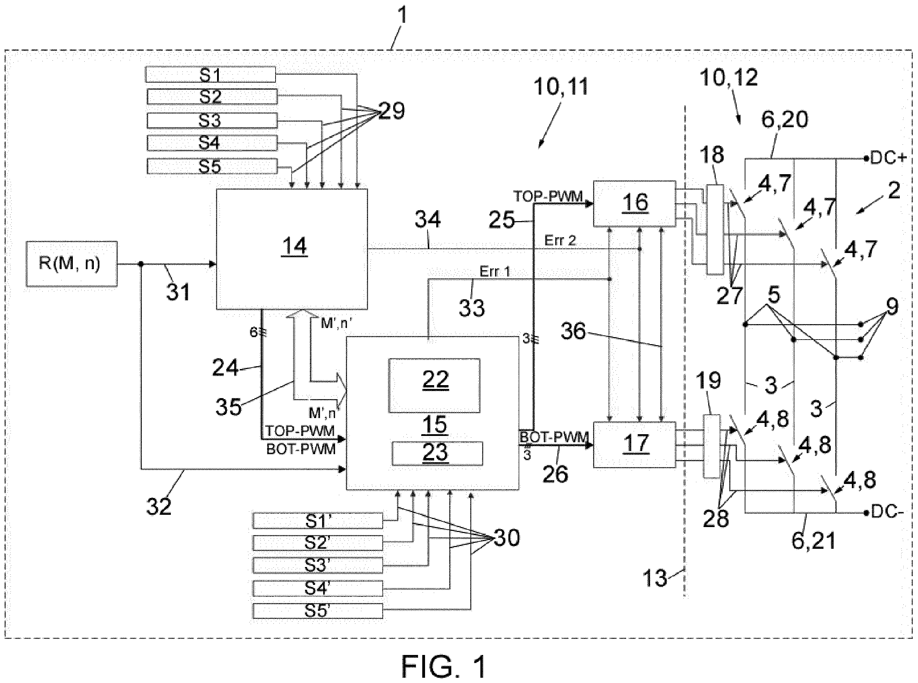

Die Erfindung wird nun anhand eines Ausführungsbeispiels näher erläutert, wobei Bezug auf Fig. 1 genommen wird.

In Fig.1 ist anhand einer schematischen Darstellung der Aufbau eines insgesamt mit der Bezugszahl 1 bezeichneten, erfindungsgemäßen 3-Phasen-Wechselrichters veranschaulicht. Der 3-Phasen-Wechselrichter 1 dient zur Wandlung einer Gleichspannung in drei Wechselstromphasen zur Speisung einer elektrischen Maschine, hier beispielsweise ein Synchron- oder Asynchronmotor eines Kraftfahrzeugs mit Elektro- oder Hybridantrieb, was in Fig. 1 nicht näher dargestellt ist.

Der 3-Phasen-Wechselrichter 1 umfasst eine Brückenschaltung 2 mit drei parallelen Halbbrücken 3, die jeweils zur Erzeugung einer Wechselstromphase dienen. Jede Halbbrücke 3 verfügt in an sich bekannter Weise über ein Schalterpaar aus zwei mit ihren Laststrompfaden in Reihe geschalteten Leistungsschaltern 4, die jeweils als Leistungstransistor, z.B. bipolarer Leistungstransistor mit isolierter Gate-Elektrode (IGBT) oder Metalloxid-Feldeffekttransistor (MOSFET), ausgebildet sind. Wie üblich ist den Leistungsschaltern 4 jeweils eine Freilaufdiode mit entgegen gesetzter Durchlassrichtung parallel geschaltet, was in Fig. 1 nicht dargestellt ist. Ein Leistungsschalter 4 kann durch einen oder mehrere parallel verschaltete Leistungstransistoren realisiert sein.

Der Brückenschaltung 2 liegt die Gleichspannung eines Spannungszwischenkreises 6 an, zu welchem Zweck die Halbrücken 3 mit zwei Zwischenkreisleitungen 20, 21 elektrisch verbunden sind. Der Spannungszwischenkreis 6 enthält einen in Fig. 1 nicht dargestellten Zwischenkreiskondensator zur Ladungsspeicherung, der an die Zwischenkreisleitungen 20, 21 so angeschlossen ist, dass eine erste Zwischenkreisleitung 20 ein oberes bzw. höheres Potential (DC+) und eine zweite Zwischenkreisleitung 21 ein als Bezugspotential dienendes, unteres bzw. niedrigeres Potential (DC-) aufweist. Aus der Differenz der beiden Potentiale (DC+, DC-) ergibt sich die Zwischenkreisspannung, welche von den Halbbrücken 3 zu den Wechselstromphasen umgesetzt wird. Eine Halbbrücke 3 umfasst einen an das obere Potential (DC+) angeschlossenen TOP-Leistungsschalter 7 sowie einen an das untere Potential (DC-) angeschlossenen BOT-Leistungsschalter 8. Ein mit einem Verbindungspunkt 5 (Mittelabgriff) zwischen zwei in Reihe geschalteten Leistungsschaltern 4 elektrisch verbundener Lastausgang 9 der Halbbrücke 3 kann wahlweise mit dem oberen Potential (DC+) oder dem unteren Potential (DC-) des Spannungszwischenkreises 6 verbunden werden. An den Lastausgängen 9 liegen die Wechselstromphasen an, hier in üblicher Terminologie mit u, v, w bezeichnet, die in die Wicklungsstränge (nicht gezeigt) der elektrischen Maschine eingespeist werden können.

Um die Wechselstromphasen zu erzeugen, müssen die Leistungsschalter 4 der Brückenschaltung 2 von einer Steuerschaltung 10 entsprechend angesteuert werden. Die Steuerschaltung 10 ist in einen primärseitigen Schaltungsteil 11 und einen sekundärseitigen Schaltungsteil 12 unterteilt, welche durch eine galvanisch trennende Übertragungseinrichtung miteinander verbunden sind. In Fig. 1 ist die galvanische Trennung der beiden Schaltungsteile 11, 12 durch eine gestrichelte Trennlinie 13 schematisch angedeutet. Die galvanische Trennung der beiden Schaltungsteile 11, 12 erfolgt hier beispielsweise durch Optokoppler, wobei aber auch jede andere geeignete Technik eingesetzt werden kann.

Der primärseitige Schaltungsteil 11 umfasst einen Steuerlogikbaustein 14, welcher auf Basis eines Anforderungssignals R einer übergeordneten Steuereinrichtung (nicht gezeigt) ein erstes Steuersignal "TOP-PWM" zur Steuerung der TOP-Leistungsschalter 7 und ein zweites Steuersignal "BOT-PWM" zur Steuerung der BOT-Leistungsschalter 8 als Ausgangssignale erzeugt. Durch das dem Steuerlogikbaustein 14 zugeführte Anforderungssignal R wird ein Soll-Betriebszustand der elektrischen Maschine vorgegeben, hier beispielsweise gegeben durch ein Soll-Drehmoment M und eine Soll-Drehzahl n. Das Anforderungssignal R, das von der übergeordneten Steuereinrichtung beispielsweise aufgrund einer momentanen Gaspedalstellung erzeugt wird, wird dem Steuerlogikbaustein 14 über eine erste Anforderungsleitung 31 als Eingangssignal zugeführt.

Wie in Fig. 1 veranschaulicht, werden dem Steuerlogikbaustein 14 weiterhin eine Mehrzahl Sensorsignale S1-S5 über erste Sensorleitungen 29 als Eingangssignale zugeführt. Die Sensorsignale S1-S5 werden von Sensoren zur Erfassung von Messgrößen, welche den momentanen Ist-Betriebszustand der elektrischen Maschine und des 3-Phasen-Wechselrichters 1 beschreiben, erzeugt. Als Sensorsignale sind hier beispielsweise vorgesehen: S1 = Stromgröße (Amplitude) der erzeugten Wechselstromphasen (u, v, w), S2 = Rotationsgeschwindigkeit bzw. Drehzahl (n') eines Rotors der elektrischen Maschine, S3 = Position des Rotors, S4 = Temperatur der elektrischen Maschine und S5 = Zwischenkreisspannung (DC+, DC-). Es versteht sich, dass dies lediglich eine beispielhafte Aufzählung ist, wobei eine Vielzahl weiterer Sensorsignale, welche den Ist-Betriebszustand beschreiben, als Sensorsignale für den Steuerlogikbaustein 14 vorgesehen sein können.

Der Steuerlogikbaustein 14 erzeugt die Steuersignale TOP-PWM und BOT-PWM auf Basis der Sensorsignale S1-S5, da eine Ansteuerung der Leistungsschalter 4 vom Ist-Betriebszustand der elektrischen Maschine und des 3-Phasenwechselrichters 1 abhängt. Insbesondere ist der Steuerlogikbaustein 14 so eingerichtet, dass aus den Sensorsignalen S1-S5 ein Ist-Drehmoment M' abgeleitet werden kann, um den durch das Anforderungssignal R vorgegebenen Soll-Betriebszustand der elektrischen Maschine einzustellen. Durch einen Abgleich von Ist-Drehmoment M' mit Soll-Drehmoment M sowie Ist-Drehzahl n' mit Soll-Drehzahl n durch den Steuerlogikbaustein 14 ist eine Regelung der elektrischen Maschine möglich und der Erfolg der Steuerung kann kontrolliert werden. Wie üblich werden die Steuersignale TOP-PWM und BOT-PWM durch Anwenden eines PWM-Verfahrens (PWM = Pulsweitenmodulation) erzeugt.

Der primärseitige Schaltungsteil 11 umfasst weiterhin einen Kontrolllogikbaustein 15, dem das Anforderungssignal R anliegt. Zu diesem Zweck wird dem Kontrolllogikbaustein 15 das Anforderungssignal R über eine zweite Anforderungsleitung 32 direkt (d.h. ohne Zwischenschaltung des Steuerlogikbausteins 14) als Eingangssignal zugeführt. Die erste Anforderungsleitung 31 und die zweite Anforderungsleitung 32 sind zumindest abschnittsweise voneinander getrennt. Der Kontrolllogikbaustein 15 hat im Wesentlichen Kontrollaufgaben und kann beispielsweise als kostengünstiger FPGA (FPGA = Field Programmable Gate Array) ausgeführt sein. Im Unterschied zum Steuerlogikbaustein 14 dient der Kontrolllogikbaustein 15 nicht zum Erzeugen der Steuersignale TOP-PWM und BOT-PWM.

Wie in Fig. 1 veranschaulicht, werden dem Kontrolllogikbaustein 15, neben dem Anforderungssignal R, Sensorsignale S1'-S5' für die gleichen Messgrößen wie dem Steuerlogikbaustein 14 über zweite Sensorleitungen 30 als Eingangssignale zugeführt. Die Sensorsignale S1'-S5' für den Kontrolllogikbaustein 15 können von denselben Sensoren erzeugt sein wie die Sensorsignale S1-S5 für den Steuerlogikbaustein 14. Alternativ ist jedoch auch möglich, dass die Sensorsignale S1-S5 für den Steuerlogikbaustein 14 und die Sensorsignale S1'-S5' für den Kontrolllogikbaustein 15 von redundanten Sensoren erzeugt werden, so dass die Sensorsignale S1-S5 ausschließlich dem Steuerlogikbaustein 14 und die Sensorsignale S1'-S5' ausschließlich dem Kontrolllogikbaustein 15 anliegen. Dies hat den Vorteil, dass eine Fehlfunktion eines Sensors durch einen redundanten Sensor erkannt werden kann. Der Kontrolllogikbaustein 15 ist so eingerichtet, dass auf Basis der zugeführten Sensorsignale S1'-S5' ein Ist-Drehmoment M' abgeleitet werden kann, so dass ein Abgleich von Ist-Drehmoment M' mit Soll-Drehmoment M sowie Ist-Drehzahl n' mit Soll-Drehzahl n möglich ist.

Die vom Steuerlogikbaustein 14 generierten Steuersignale TOP-PWM und BOT-PWM werden zunächst dem Kontrolllogikbaustein 15 durch eine Steuerleitung 24 als Eingangsignale zugeführt, welche die beiden Steuerlogikbausteine 14, 15 miteinander verbindet. Im Normalfall werden die Steuersignale TOP-PWM und BOT-PWM durch den Kontrolllogikbaustein 15 durchgeschleift und anschließend einem ersten Sicherheitslogikbaustein 16 bzw. einem zweiten Sicherheitslogikbaustein 17 als Eingangssignale zugeführt. Das Steuersignal TOP-PWM liegt über eine TOP-Steuerleitung 25 dem ersten Sicherheitslogikbaustein 16 und das Steuersignal BOT-PWM über eine BOT-Steuerleitung 26 dem zweiten Sicherheitslogikbaustein 17 an. In den beiden Sicherheitslogikbausteinen 16, 17 sind verschiedene Sicherheitsfunktionen implementiert, worauf weiten unten noch näher eingegangen wird. Die beiden Sicherheitslogikbausteine 16, 17 können jeweils als kostengünstiger CPLD (CPLD = Complex Programmable Logic Device) ausgeführt sein.

Im Normalfall werden die Steuersignale TOP-PWM bzw. BOT-PWM durch den ersten bzw. zweiten Sicherheitslogikbaustein 16, 17 durchgeschleift. Das Steuersignal TOP-PWM wird anschließend über drei TOP-Steuerleitungen 25 einer sekundärseitigen TOP-Treiberschaltung 18 zum Ansteuern der TOP-Leistungsschalter 7, das Steuersignal BOT-PWM über drei BOT-Steuerleitungen 26 einer sekundärseitigen BOT-Treiberschaltung 19 zum Ansteuern der BOT-Leistungsschalter 8 zugeführt. In der TOP-Treiberschaltung 18 werden, abhängig von den Logikpegeln des Steuersignals TOP-PWM, Steuerspannungen erzeugt, welche über drei TOP-Steuerspannungsleitungen 27 den Steuereingängen der TOP-Leistungsschalter 7 direkt anliegen. In entsprechender Weise werden in der BOT-Treiberschaltung 19, abhängig von den Logikpegeln des Steuersignals BOT-PWM, BOT-Steuerspannungen erzeugt, welche über drei BOT-Steuerspannungsleitungen 28 den Steuereingängen der BOT-Leistungsschalter 8 direkt anliegen. Durch geeignetes Schalten der Leistungsschalter 4 können die Wechselstromphasen u, v, w an den Lastausgängen 10 der Halbbrücken 3 erzeugt werden.

Wie bereits ausgeführt, generiert der Steuerlogikbaustein 14 die Steuersignale TOP-PWM bzw. BOT-PWM zur Ansteuerung der Leistungsschalter 4 auf Basis eines durch die Sensorsignale S1-S5 ermittelten Ist-Betriebszustands, um einen durch das Anforderungssignal R vorgegebenen Soll-Betriebszustands der elektrischen Maschine einzustellen. Zeitgleich kontrolliert eine als Steuerkontrolleinheit 22 bezeichnete Funktionseinheit innerhalb des Kontrolllogikbausteins 15 die Steuerung der elektrischen Maschine durch den Steuerlogikbaustein 14. Die Steuerkontrolleinheit 22 ist zu diesem Zweck so eingerichtet, dass der Ist-Betriebszustand der elektrischen Maschine, gegeben durch Ist-Drehmoment M' und Ist-Drehzahl n', auf Basis der anliegenden Sensorsignale S1'-S5' ermittelt wird. Zudem ist die Steuerkontrolleinheit 22 so eingerichtet, dass ein nach Ablauf einer vorgegebenen Wartezeit nach Erzeugung der Steuersignale TOP-PWM und BOT-PWM vorliegende Ist-Betriebszustand mit dem durch das Anforderungssignal R vorgegebenen Soll-Betriebszustand abgeglichen (verglichen) wird. Liegt im Ergebnis ein regelungstechnisch signifikanter Unterschied zwischen Ist- und Soll-Betriebszustand vor, führt die Steuerkontrolleinheit 22 die elektrische Maschine in einen sicheren Betriebszustand über, wobei eine weitere Speisung mit Wechselstrom gestoppt wird, so dass die Maschine ausläuft. Erreicht wird dies durch Erzeugen eines Kontrolllogik-Fehlersignals ERR 1 (bzw. Ändern des Logikpegels des Fehlersignals ERR 1) durch die Steuerkontrolleinheit 22, welches über eine erste Fehlerleitung 33 sowohl dem ersten Sicherheitslogikbaustein 16 als auch dem zweiten Sicherheitslogikbaustein 17 als Eingangssignal anliegt. Die beiden Sicherheitslogikbausteine 16, 17 sind so eingerichtet, dass eine Modifikation der Steuersignale TOP-PWM und BOT-PWM erfolgt, wobei die Modifikation dergestalt ist, dass im Fehlerfall wahlweise die folgenden Schaltzustände der Leistungsschalter 4 eingestellt werden:

### Schaltzustand 1)

Alle Leistungsschalter 4 werden ausgeschaltet. Zu diesem Zweck modifiziert der erste Sicherheitslogikbaustein 16 das Steuersignal TOP-PWM so, dass es einen Logikpegel hat, bei dem die TOP-Leistungsschalter 7 ausgeschaltet werden. Entsprechend modifiziert der zweite Sicherheitslogikbaustein 17 das Steuersignal BOT-PWM so, dass es einen Logikpegel hat, bei dem die BOT-Leistungsschalter 8 ausgeschaltet werden.

### Schaltzustand 2)

Alle TOP-Leistungsschalter 7 werden eingeschaltet und alle BOT-Leistungsschalter 8 werden ausgeschaltet. Zu diesem Zweck modifiziert der erste Sicherheitslogikbaustein 16 das Steuersignal TOP-PWM so, dass es einen Logikpegel hat, bei dem die TOP-Leistungsschalter 7 eingeschaltet werden. Entsprechend modifiziert der zweite Sicherheitslogikbaustein 17 das Steuersignal BOT-PWM so, dass es einen Logikpegel hat, bei dem die BOT-Leistungsschalter 8 ausgeschaltet werden.

### Schaltzustand 3)

Alle TOP-Leistungsschalter 7 werden ausgeschaltet und alle BOT-Leistungsschalter 8 werden eingeschaltet. Zu diesem Zweck modifiziert der erste Sicherheitslogikbaustein 16 das Steuersignal TOP-PWM so, dass es einen Logikpegel hat, bei dem die TOP-Leistungsschalter 7 ausgeschaltet werden. Entsprechend modifiziert der zweite Sicherheitslogikbaustein 17 das Steuersignal BOT-PWM so, dass es einen Logikpegel hat, bei dem die BOT-Leistungsschalter 8 eingeschaltet werden.

Die beiden Sicherheitslogikbausteine 16, 17 sind so eingerichtet, dass bei einem vorgegebenen bzw. vorgebbaren Logikpegel des Kontrolllogik-Fehlersignals ERR 1 eine Modifikation der Steuersignale TOP-PWM und BOT-PWM gemäß einem der genannten Schaltzustände erfolgt, wohingegen bei dem anderen Logikpegel eine solche Modifikation unterbleibt und die Steuersignale TOP-PWM und BOT-PWM die Sicherheitslogikbausteine 16, 17 ohne Änderung der Logikpegel passieren können.

Somit kann bei einem von der Steuerkontrolleinheit 22 erkannten Unterschied zwischen Ist- und Soll-Betriebszustand der elektrischen Maschine, welcher auf eine Funktionsstörung des Steuerlogikbausteins 14 schließen lässt, die elektrische Maschine durch das Kontrolllogik-Fehlersignal ERR 1 in einen sicheren Betriebszustand überführt werden. Die Steuerkontrolleinheit 22 greift im Fehlerfall vorrangig in die Steuerung der elektrischen Maschine ein.

In besonders vorteilhafter Weise liegt das Anforderungssignal R dem Kontrolllogikbaustein 15 ohne Zwischenschaltung des Steuerlogikbausteins 14 direkt an, so dass der Soll-Betriebszustand der elektrischen Maschine auch dann erfasst wird, wenn eine Funktionsstörung des Steuerlogikbausteins 14 vorliegt. Zudem liegen die Sensorsignale S1'-S5' dem Kontrolllogikbaustein 15 ohne Zwischenschaltung des Steuerlogikbausteins 14 direkt an, so dass auch der Ist-Betriebszustand der elektrischen Maschine bei einer Funktionsstörung des Steuerlogikbausteins 14 ermittelt werden kann. Die Kontrollfunktion der Steuerkontrolleinheit 22 wird somit durch eine Funktionsstörung des Steuerlogikbausteins 14 nicht beeinträchtigt.

Ein weiterer besonderer Vorteil ergibt sich dadurch, dass für die TOP- bzw. BOT-Leistungsschalter 7, 8 jeweils ein separater Sicherheitslogikbaustein 16, 17 vorgesehen ist. Hierdurch kann selbst beim Ausfall eines Sicherheitslogikbausteins durch eine Modifikation des Steuersignals TOP-PWM bzw. BOT-PWM durch den noch funktionsfähigen anderen Sicherheitslogikbaustein die elektrische Maschine in einen sicheren Betriebszustand überführt werden kann. Zudem sind die beiden Sicherheitslogikbausteine 16, 17 durch eine Sicherheitslogikleitung 36 miteinander verbunden und so eingerichtet, dass ein Abgleich der Steuersignale TOP-PWM und BOT-PWM erfolgen kann. Insbesondere kann dadurch ein gleichzeitiges Einschalten der Leistungsschalter 4 einer selben Halbbrücke 3 (Kurzschluss des Spannungszwischenkreises 6) vermieden werden.

Wie in Fig. 1 schematisch angedeutet, sind der Steuer- und Kontrolllogikbaustein 14, 15 durch eine Steuerlogikleitung 35 (z.B. paralleler Datenbus) miteinander verbunden. Zudem sind sie so eingerichtet, dass eine wechselseitige Übertragung sowie ein Abgleich des jeweils auf Basis der Sensorsignale S1-S5 bzw. S1'-S5' ermittelten Ist-Betriebszustands der elektrischen Maschine erfolgt. Im vorliegenden Beispiel wird das vom Steuerlogikbaustein 14 ermittelte Ist-Drehmoment M' und die Ist-Drehzahl n' an den Kontrolllogikbaustein 15 übertragen. Zudem wird das vom Kontrolllogikbaustein 15 ermittelte Ist-Drehmoment M' und die erhaltene Ist-Drehzahl n' an den Steuerlogikbaustein 14 übertragen. Liegt im Ergebnis ein Unterschied in den Ist-Betriebszuständen vor, führt die Steuerkontrolleinheit 22 die elektrische Maschine in einen sicheren Betriebszustand über, indem das Kontrolllogik-Fehlersignal ERR 1 erzeugt bzw. dessen Logikpegel geändert wird, um wahlweise einen der oben genannten verschiedenen Schaltzustände einzustellen. Dieser Eingriff des Kontrolllogikbausteins 15 in die Schaltersteuerung hat den Vorteil, dass eine Fehlfunktion des Steuerlogikbausteins 14 noch vor Ablauf der voraussichtlichen Einstellzeit des Soll-Betriebszustands der elektrischen Maschine erfolgen kann. Wie bereits ausgeführt wurde, erfordert eine Einstellung des Soll-Betriebszustands aufgrund der Trägheit der elektrischen Maschine in der Regel eine gewisse Wartezeit nach Erzeugung der Steuersignale TOP-PWM und BOT-PWM.

Weiterhin sind die beiden Steuerlogikbausteine 14, 15 so eingerichtet, dass eine wechselseitige Übertragung und Abgleich der Sensorsignale S1-S5 bzw. S1'-S5' sowie gegebenenfalls von Funktionsparametern, welche den Funktionszustand des jeweiligen Steuerlogikbausteins 14, 15 kennzeichnen, über die Steuerlogikleitung 35 erfolgt. Liegt im Ergebnis ein Unterschied zwischen den Sensorsignalen S1-S5 bzw. S1'-S5' vor, führt die Steuerkontrolleinheit 22 die elektrische Maschine in einen sicheren Betriebszustand über, indem das Kontrolllogik-Fehlersignal ERR 1 erzeugt bzw. dessen Logikpegel geändert wird, so dass wahlweise einer der oben genannten Schaltzustände eingestellt wird. Auch dieser Eingriff des Kontrolllogikbausteins 15 in die Steuerung hat den Vorteil, dass eine Fehlfunktion des Steuerlogikbausteins 14 noch vor Ablauf der Einstellzeit erfolgen kann.

In besonders vorteilhafter Weise ist der Steuerlogikbaustein 14 auch direkt (d.h. ohne Zwischenschaltung des Kontrolllogikbausteins 15) über eine zweite Fehlerleitung 34 mit den beiden Sicherheitslogikbausteinen 16, 17 verbunden. Fällt die Signalübertragung (Ist-Drehmoment M', Ist-Drehzahl n', Sensorsignal S1'-S5' oder anderer Funktionsparameter) vom Kontrolllogikbaustein 15 an den Steuerlogikbaustein 14 aus, so lässt dies auf eine Funktionsstörung des Kontrolllogikbausteins 15 schließen. In der Folge gibt der Steuerlogikbaustein 14 ein vom Kontrolllogik-Fehlersignal unabhängiges Steuerlogik-Fehlersignal ERR 2 direkt an die beiden Sicherheitslogikbausteine 16, 17 ab, wodurch die elektrische Maschine in einen sicheren Zustand überführt wird. Durch das Steuerlogik-Fehlersignal ERR 2 wird in den Sicherheitslogikbausteinen 16, 17 eine Modifikation der Steuersignale TOP-PWM und BOT-PWM zum wahlfreien Einstellen der genannten Schaltzustände 1) bis 3) ausgelöst. Zur Vermeidung unnötiger Wiederholungen wird diesbezüglich auf die obigen Ausführungen verwiesen.

In besonders vorteilhafter Weise kontrolliert somit auch der Steuerlogikbaustein 14 die einwandfreie Funktion des Kontrolllogikbausteins 15 und kann unabhängig vom Kontrolllogikbaustein 15 direkt auf die beiden Sicherheitslogikbausteine 16, 17 zugreifen, um durch das Steuerlogik-Fehlersignal ERR 2 die elektrische Maschine in einen sicheren Betriebszustand zu überführen. Die Betriebssicherheit des 3-Phasen-Wechselrichters 1 kann hierdurch noch weiter verbessert werden.

Obgleich dies in Fig. 1 nicht explizit dargestellt ist, kann insbesondere bei einem Ausfall des Kontrolllogikbausteins 15 vorgesehen sein, die Steuersignale TOP-PWM direkt (d.h. ohne Zwischenschaltung des Kontrolllogikbausteins 15) vom Steuerlogikbaustein 14 an den ersten Sicherheitslogikbaustein 16 sowie die Steuersignale BOT-PWM direkt (d.h. ohne Zwischenschaltung des Kontrolllogikbausteins 15) vom Steuerlogikbaustein 14 an den zweiten Sicherheitslogikbaustein 17 zu übertragen. Insbesondere kann in diesem Fall in der oben beschriebenen Weise eine Modifikation der Steuersignale TOP-PWM bzw. BOT-PWM durch das Steuerlogik-Fehlersignal ERR 2 erfolgen.

Lediglich ergänzend sei erwähnt, dass der Kontrolllogikbaustein 15, neben weiteren Funktionseinheiten auf die hier nicht näher eingegangen wird, beispielsweise eine Totzeitkontrolleinheit 23 aufweist, durch die die Steuersignale TOP-PWM und BOT-PWM abgeglichen werden, um ein simultanes Einschalten der BOT- und TOP-Leistungsschalter 7, 8 einer selben Halbbrücke 3 (d.h. Kurzschluss des Spannungszwischenkreises 6) zu vermeiden.

### Bezugszeichenliste

1 3-Phasen-Wechselrichter
2 Brückenschaltung
3 Halbbrücke
4 Leistungsschalter
5 Verbindungspunkt
6 Spannungszwischenkreis
7 TOP-Leistungsschalter
8 BOT-Leistungsschalter
9 Lastausgang
10 Steuerschaltung
11 primärseitiger Schaltungsteil
12 sekundärseitiger Schaltungsteil
13 Trennlinie
14 Steuerlogikbaustein
15 Kontrolllogikbaustein
16 erster Sicherheitslogikbaustein
17 zweiter Sicherheitslogikbaustein
18 TOP-Treiberschaltung
19 BOT-Treiberschaltung
20 erste Zwischenkreisleitung
21 zweite Zwischenkreisleitung
22 Steuerkontrolleinheit
23 Totzeitkontrolleinheit
24 Steuerleitung
25 TOP-Steuerleitung
26 BOT-Steuerleitung
27 TOP-Steuerspannungsleitung
28 BOT-Steuerspannungsleitung
29 erste Sensorleitung
30 zweite Sensorleitung
31 erste Anforderungsleitung
32 zweite Anforderungsleitung
33 erste Fehlerleitung
34 zweite Fehlerleitung
35 Steuerlogikleitung
36 Sicherheitslogikleitung

## Patentansprüche

1. Stromrichter (1) zum Speisen einer elektrischen Maschine mit einer Betriebsspannung, welcher eine oder mehrere Halbbrücken (3) mit Leistungsschaltern (7, 8) zum Erzeugen von Wechselstromphasen umfasst, wobei die Leistungsschalter (7, 8) durch eine Steuerschaltung (10) ansteuerbar sind, welche umfasst:
- einen Steuerlogikbaustein (14), an den eine erste Anforderungsleitung (31) für ein einen Soll-Betriebszustand der Maschine vorgebendes Anforderungssignal (R) sowie erste Sensorleitungen (29) für erste Sensorsignale (S1-S5) angeschlossen sind, wobei der Steuerlogikbaustein (14) dazu eingerichtet ist, auf Basis der ersten Sensorsignale (S1-S5) einen Ist-Betriebszustand der Maschine zu ermitteln und auf Basis des Ist-Betriebszustands Steuersignale (TOP-PWM, BOT-PWM) für die Leistungsschalter (7, 8) zum Einstellen des Soll-Betriebszustands zu erzeugen,
- einen Kontrolllogikbaustein (15), welcher an eine zweite Anforderungsleitung (32) für das Anforderungssignal (R) sowie zweite Sensorleitungen (30) für zweite Sensorsignale (S1'-S5') angeschlossen ist, wobei der Kontrolllogikbaustein (15) dazu eingerichtet ist, auf Basis der zweiten Sensorsignale (S1'-S5'), nach Ablauf einer vorgebbaren Wartezeit nach Erzeugen der Steuersignale (TOP-PWM, BOT-PWM), einen Ist-Betriebszustand der Maschine zu ermitteln, einen Abgleich zwischen Ist-Betriebszustand und Soll-Betriebszustand durchzuführen und ein Kontrolllogik-Fehlersignal (ERR 1) zu erzeugen, falls der Ist-Betriebszustand vom Soll-Betriebszustand abweicht,
- wenigstens einen Sicherheitslogikbaustein (16, 17), welcher durch eine erste Fehlerleitung (33) an den Kontrolllogikbaustein (15) angeschlossen ist, wobei der Sicherheitslogikbaustein (16, 17) dazu eingerichtet ist, die Steuersignale (TOP-PWM, BOT-PWM) auf Basis des Kontrolllogik-Fehlersignals (ERR 1) so zu modifizieren, dass eine Speisung der Maschine mit einer Betriebsspannung gestoppt werden kann,
wobei der Steuerlogik- und Kontrolllogikbaustein (14, 15) durch eine Steuerlogikleitung (35) miteinander verbunden sind, wobei der Steuerlogikbaustein (14) mit dem wenigstens einen Sicherheitslogikbaustein (16, 17) durch eine zweite Fehlerleitung (34) verbunden ist, wobei der Kontrolllogikbaustein (15) dazu eingerichtet ist, den Ist-Betriebszustand und/oder die zweiten Sensorsignale (S1'-S5') an den Steuerlogikbaustein (14) zu übertragen und der Steuerlogikbaustein (14) dazu eingerichtet ist, ein Steuerlogik-Fehlersignal (ERR 2) zu erzeugen, falls eine Signalübertragung durch den Kontrolllogikbaustein (15) nicht erfolgt, und wobei der Sicherheitslogikbaustein (16, 17) dazu eingerichtet ist, die Steuersignale (TOP-PWM, BOT-PWM) auf Basis des Steuerlogik-Fehlersignals (ERR 2) so zu modifizieren, dass eine Speisung der Maschine mit Betriebsspannung gestoppt werden kann.

2. Stromrichter (1) nach Anspruch 1, wobei der Steuerlogikbaustein (14) dazu eingerichtet ist, den Ist-Betriebszustand und/oder die ersten Steuersignale (S1-S5) an den Kontrolllogikbaustein (15) zu übertragen, wobei der Kontrolllogikbaustein (15) dazu eingerichtet ist, einen Abgleich zwischen den Ist-Betriebszuständen und/oder Sensorsignalen durchzuführen und das Kontrolllogik-Fehlersignal (ERR 1) zu erzeugen, falls der Ist-Betriebszustand des Steuerlogikbausteins (14) vom Ist-Betriebszustand des Kontrolllogikbausteins (15) abweicht und/oder die ersten Sensorsignale (S1-S5) von den zweiten Sensorsignalen (S1'-S5') abweichen.

3. Stromrichter (1) nach Anspruch 1 oder 2, welcher einen ersten Sicherheitslogikbaustein (16) für Steuersignale (TOP-PWM) der TOP-Leistungsschalter (7) und einen zweiten Sicherheitslogikbaustein (17) für Steuersignale (BOT-PWM) der BOT-Leistungsschalter (8) umfasst.

4. Stromrichter (1) nach Anspruch 3, bei welchem die beiden Sicherheitslogikbausteine (16, 17) miteinander verbunden sind.

5. Elektrische Maschine mit einem Stromrichter (1) nach einem der Ansprüche 1 bis 4 zur Speisung mit einer Betriebsspannung.

6. Kraftfahrzeug mit einem Elektro- oder Hybridantrieb, das mit einer elektrischen Maschine mit Stromrichter nach Anspruch 5 als Antriebsmaschine ausgerüstet ist.

7. Verfahren zum Betreiben eines Stromrichters (1) zum Speisen einer elektrischen Maschine mit einer Betriebsspannung, welcher eine oder mehrere Halbbrücken (3) mit Leistungsschaltern (7, 8) zum Erzeugen von Wechselstromphasen umfasst, mit den folgenden Schritten:
- Übertragen eines einen Soll-Betriebszustand der Maschine vorgebenden Anforderungssignals (R) und erster Sensorsignale (S1-S5) an einen Steuerlogikbaustein (14),
- Ermitteln eines Ist-Betriebszustands der Maschine auf Basis der ersten Sensorsignale (S1-S5) durch den Steuerlogikbaustein (14),
- Erzeugen von Steuersignalen (TOP-PWM, BOT-PWM) für die Leistungsschalter (7, 8) durch den Steuerlogikbaustein (14) auf Basis des Ist-Betriebszustands zum Einstellen des Soll-Betriebszustands,
- Übertragen des Anforderungssignals (R) und zweiter Sensorsignale (S1'-S5') an einen Kontrolllogikbaustein (15),
- Ermitteln eines Ist-Betriebszustands der Maschine auf Basis der zweiten Sensorsignale (S1'-S5') nach Ablauf einer vorgebbaren Wartezeit nach Erzeugen der Steuersignale (TOP-PWM, BOT-PWM),
- Erzeugen eines Kontrolllogik-Fehlersignals (ERR 1) durch den Kontrolllogikbaustein (15), falls der Ist-Betriebszustand vom Soll-Betriebszustand abweicht,
- Modifizieren der Steuersignale (TOP-PWM, BOT-PWM) auf Basis des Kontrolllogik-Fehlersignals (ERR 1) derart, dass eine Speisung der Maschine mit Betriebsspannung gestoppt wird,
- Übertragen des Ist-Betriebszustands und/oder der zweiten Sensorsignale (S1'-S5') vom Kontrolllogikbaustein (15) an den Steuerlogikbaustein (14),
- Erzeugen eines Steuerlogik-Fehlersignals (ERR 2) durch den Steuerlogikbaustein (14), falls eine Signalübertragung durch den Kontrolllogikbaustein (15) nicht erfolgt,
- Modifizieren der Steuersignale (TOP-PWM, BOT-PWM) auf Basis des Steuerlogik-Fehlersignals (ERR 2) derart, dass eine Speisung der Maschine mit Betriebsspannung gestoppt wird.

8. Verfahren nach Anspruch 7, welches die folgenden Schritte umfasst:
- Übertragen des Ist-Betriebszustands und/oder der ersten Steuersignale (S1-S5) vom Steuerlogikbaustein (14) an den Kontrolllogikbaustein (15),
- Abgleichen der Ist-Betriebszustände und/oder der ersten Sensorsignale (S1-S5) mit den zweiten Sensorsignalen (S1'-S5'),
- Erzeugen des Kontrolllogik-Fehlersignals (ERR 1), falls die Ist-Betriebszustände voneinander abweichen und/oder die ersten Sensorsignale (S1-S5) von den zweiten Sensorsignalen (S1'-S5') abweichen.

9. Verfahren nach Anspruch 7 oder 8, welches die folgenden Schritte umfasst:
- Übertragen der Steuersignale (TOP-PWM, BOT-PWM) an wenigstens einen Sicherheitslogikbaustein (16, 17),
- Übertragen des Kontrolllogik- bzw. Steuerlogik-Fehlersignals (ERR 1, ERR 2) an den Sicherheitslogikbaustein (16, 17),
- Modifizieren der Steuersignale (TOP-PWM, BOT-PWM) auf Basis des Kontrolllogik- bzw. Steuerlogik-Fehlersignals (ERR1, ERR 2) im Sicherheitslogikbaustein (16, 17).

10. Verfahren nach Anspruch 9, welches die folgenden Schritte umfasst:
- Übertragen von Steuersignalen (TOP-PWM) für mit einem höheren Potential (DC+) verbundene TOP-Leistungsschalter (7) an einen ersten Sicherheitslogikbaustein (16),
- Übertragen von Steuersignalen (BOT-PWM) für mit einem niedrigeren Potential (DC-) verbundene BOT-Leistungsschalter (8) an einen zweiten Sicherheitslogikbaustein (17),
- Übertragen des Kontrolllogik- bzw. Steuerlogik-Fehlersignals (ERR 1, ERR 2) an die beiden Sicherheitslogikbausteine (16, 17),
- Modifizieren der Steuersignale (TOP-PWM) für die TOP-Leistungsschalter (7) im ersten Sicherheitslogikbaustein (16) auf Basis des Kontrolllogik- bzw. Steuerlogik-Fehlersignals (ERR 1, ERR 2),
- Modifizieren der Steuersignale (BOT-PWM) für die BOT-Leistungsschalter (8) im zweiten Sicherheitslogikbaustein (17) auf Basis des Kontrolllogik- bzw. Steuerlogik-Fehlersignals (ERR 1, ERR 2).

11. Verfahren nach einem der Ansprüche 7 bis 10, bei welchem die Steuersignale (TOP-PWM, BOT-PWM) auf Basis des Kontrolllogik- bzw. Steuerlogik-Fehlersignals (ERR 1, ERR 2) derart modifiziert werden, dass
- alle Leistungsschalter (7, 8) ausgeschaltet werden, oder
- alle mit einem höheren Potential (DC+) verbundene TOP-Leistungsschalter (7) ein-und alle mit einem niedrigeren Potential (DC-) verbundene BOT-Leistungsschalter (8) ausgeschaltet werden, oder
- alle mit einem höheren Potential (DC+) verbundene TOP-Leistungsschalter (7) aus- und alle mit einem niedrigeren Potential (DC-) verbundene BOT-Leistungsschalter (8) eingeschaltet werden.

12. Verfahren nach einem der Ansprüche 7 bis 11, bei welchem die ersten Sensorsignale (S1-S5) von Sensoren erzeugt werden, welche verschieden sind von Sensoren, welche die zweiten Sensorsignale (S1'-S5') erzeugen.

## Claims

1. Power converter (1) for supplying an electrical machine with an operating voltage, which power converter comprises one or more half-bridges (3) with circuit breakers (7, 8) for generating AC phases, wherein the circuit breakers (7, 8) can be controlled by a control circuit (10) comprising:
- a control logic module (14), to which a first request line (31) for a request signal (R) predefining a desired operating state of the machine and first sensor lines (29) for first sensor signals (S1-S5) are connected, wherein the control logic module (14) is set up to determine an actual operating state of the machine on the basis of the first control signals (S1-S5) and to generate control signals (TOP-PWM, BOT-PWM) for the circuit breakers (7, 8) on the basis of the actual operating state in order to set the desired operating state,
- a monitoring logic module (15) which is connected to a second request line (32) for the request signal (R) and to second sensor lines (30) for second sensor signals (S1'-S5'), wherein the monitoring logic module (15) is set up to determine an actual operating state of the machine on the basis of the second sensor signals (S1'-S5') after expiry of a predefinable waiting time after generating the control signals (TOP-PWM, BOT-PWM), to compare the actual operating state and the desired operating state, and to generate a monitoring logic error signal (ERR 1) if the actual operating state differs from the desired operating state,
- at least one safety logic module (16, 17) which is connected to the monitoring logic module (15) by means of a first error line (33), wherein the safety logic module (16, 17) is set up to modify the control signals (TOP-PWM, BOT-PWM) on the basis of the monitoring logic error signal (ERR 1) in such a manner that supply of the machine with an operating voltage can be stopped, wherein the control logic module (14) and the monitoring logic module (15) are connected to one another by means of a control logic line (35), wherein the control logic module (14) is connected to the at least one safety logic module (16, 17) by means of a second error line (34), wherein the monitoring logic module (15) is set up to transmit the actual operating state and/or the second sensor signals (S1'-S5') to the control logic module (14), and the control logic module (14) is set up to generate a control logic error signal (ERR 2) if signal transmission is not carried out by the monitoring logic module (15), and wherein the safety logic module (16, 17) is set up to modify the control signals (TOP-PWM, BOT-PWM) on the basis of the control logic error signal (ERR 2) in such a manner that supply of the machine with operating voltage can be stopped.

2. Power converter (1) according to Claim 1, wherein the control logic module (14) is set up to transmit the actual operating state and/or the first control signals (S1-S5) to the monitoring logic module (15), wherein the monitoring logic module (15) is set up to compare the actual operating states and/or sensor signals and to generate the monitoring logic error signal (ERR 1) if the actual operating state of the control logic module (14) differs from the actual operating state of the monitoring logic module (15) and/or the first sensor signals (S1-S5) differ from the second sensor signals (S1'-S5').

3. Power converter (1) according to Claim 1 or 2, which comprises a first safety logic module (16) for control signals (TOP-PWM) of the TOP circuit breakers (7) and a second safety logic module (17) for control signals (BOT-PWM) of the BOT circuit breakers (8).

4. Power converter (1) according to Claim 3, in which the two safety logic modules (16, 17) are connected to one another.

5. Electrical machine having a power converter (1) according to one of Claims 1 to 4 for supply with an operating voltage.

6. Motor vehicle having an electric or hybrid drive which is equipped with an electrical machine with a power converter according to Claim 5 as a drive machine.

7. Method for operating a power converter (1) for supplying an electrical machine with an operating voltage, which power converter comprises one or more half-bridges (3) with circuit breakers (7, 8) for generating AC phases, having the following steps of:
- transmitting a request signal (R) predefining a desired operating state of the machine and first sensor signals (S1-S5) to a control logic module (14),
- determining an actual operating state of the machine on the basis of the first sensor signals (S1-S5) by means of the control logic module (14),
- generating control signals (TOP-PWM, BOT-PWM) for the circuit breakers (7, 8) by means of the control logic module (14) on the basis of the actual operating state in order to set the desired operating state,
- transmitting the request signal (R) and second sensor signals (S1'-S5') to a monitoring logic module (15),
- determining an actual operating state of the machine on the basis of the second sensor signals (S1'-S5') after expiry of a predefinable waiting time after generating the control signals (TOP-PWM, BOT-PWM),
- generating a monitoring logic error signal (ERR 1) by means of the monitoring logic module (15) if the actual operating state differs from the desired operating state,
- modifying the control signals (TOP-PWM, BOT-PWM) on the basis of the monitoring logic error signal (ERR 1) in such a manner that supply of the machine with operating voltage is stopped,
- transmitting the actual operating state and/or the second sensor signals (S1'-S5') from the monitoring logic module (15) to the control logic module (14),
- generating a control logic error signal (ERR 2) by means of the control logic module (14) if signal transmission is not carried out by the monitoring logic module (15),
- modifying the control signals (TOP-PWM, BOT-PWM) on the basis of the control logic error signal (ERR 2) in such a manner that supply of the machine with operating voltage is stopped.

8. Method according to Claim 7, which comprises the following steps of:
- transmitting the actual operating state and/or the first control signals (S1-S5) from the control logic module (14) to the monitoring logic module (15),
- comparing the actual operating states and/or the first sensor signals (S1-S5) with the second sensor signals (S1'-S5'),
- generating the monitoring logic error signal (ERR 1) if the actual operating states differ from one another and/or the first sensor signals (S1-S5) differ from the second sensor signals (S1'-S5').

9. Method according to Claim 7 or 8, which comprises the following steps of:
- transmitting the control signals (TOP-PWM, BOT-PWM) to at least one safety logic module (16, 17),
- transmitting the monitoring logic or control logic error signal (ERR 1, ERR 2) to the safety logic module (16, 17),
- modifying the control signals (TOP-PWM, BOT-PWM) on the basis of the monitoring logic or control logic error signal (ERR 1, ERR 2) in the safety logic module (16, 17).

10. Method according to Claim 9, which comprises the following steps of:
- transmitting control signals (TOP-PWM) for TOP circuit breakers (7) connected to a higher potential (DC+) to a first safety logic module (16),
- transmitting control signals (BOT-PWM) for BOT circuit breakers (8) connected to a lower potential (DC-) to a second safety logic module (17),
- transmitting the monitoring logic or control logic error signal (ERR 1, ERR 2) to the two safety logic modules (16, 17),
- modifying the control signals (TOP-PWM) for the TOP circuit breakers (7) in the first safety logic module (16) on the basis of the monitoring logic or control logic error signal (ERR 1, ERR 2),
- modifying the control signals (BOT-PWM) for the BOT circuit breakers (8) in the second safety logic module (17) on the basis of the monitoring logic or control logic error signal (ERR 1, ERR 2).

11. Method according to one of Claims 7 to 10, in which the control signals (TOP-PWM, BOT-PWM) are modified on the basis of the monitoring logic or control logic error signal (ERR 1, ERR 2) in such a manner that
- all circuit breakers (7, 8) are switched off, or
- all TOP circuit breakers (7) connected to a higher potential (DC+) are switched on and all BOT circuit breakers (8) connected to a lower potential (DC-) are switched off, or
- all TOP circuit breakers (7) connected to a higher potential (DC+) are switched off and all BOT circuit breakers (8) connected to a lower potential (DC-) are switched on.

12. Method according to one of Claims 7 to 11, in which the first sensor signals (S1-S5) are generated by sensors which differ from sensors which generate the second sensor signals (S1'-S5').

## Revendications

1. Convertisseur de courant (1) destiné à alimenter une machine électrique avec une tension de service, lequel comprend un ou plusieurs demi-ponts (3) avec des disjoncteurs (7, 8) pour générer des phases de courant alternatif, les disjoncteurs (7, 8) pouvant être amorcés par un circuit de commande (10), lequel comprend :
- un module logique de commande (14) sur lequel sont raccordées une première ligne de requête (31) pour un signal de requête (R) prédéfinissant un état de service de consigne de la machine, ainsi que des premières lignes de capteurs (29) pour des premiers signaux de capteurs (S1 à S5), le module logique de commande (14) étant aménagé pour déterminer, sur la base des premiers signaux de capteurs (S1 à S5) un état de service réel de la machine et pour générer, sur la base de l'état de service réel des signaux de commande (TOP-PWM, BOT-PWM) pour les disjoncteurs (7, 8), pour le réglage de l'état de service de consigne,
- un module logique de contrôle (15), lequel est raccordé sur une deuxième ligne de requête (32) pour le signal de requête (R), ainsi que sur des deuxièmes lignes de capteurs (30) pour des deuxièmes signaux de capteurs (S1' à S5'), le module logique de contrôle (15) étant aménagé pour déterminer, sur la base des deuxièmes signaux de capteurs (S1' à S5'), après l'écoulement d'un temps d'attente prédéfinissable après la génération des signaux de commande (TOP-PWM, BOT-PWM), un état de service réel de la machine pour procéder à une comparaison entre l'état de service réel et l'état de service de consigne et pour générer un signal de défaut (ERR 1) de la logique de contrôle, si l'état de service réel diffère de l'état de service de consigne,
- au moins un module logique de sécurité (16, 17), lequel est raccordé via une première ligne de défaut (33) sur le module logique de contrôle (15), le module logique de sécurité (16, 17) étant aménagé pour modifier les signaux de commande (TOP-PWM, BOT-PWM) sur la base du signal de défaut (ERR 1) de logique de contrôle, de sorte à permettre de stopper une alimentation de la machine avec une tension de service,
- les modules logiques de commande et de contrôle (14, 15) étant connectés l'un avec l'autre par une ligne logique de commande (35), le module logique de commande (14) étant connecté à l'au moins un module logique de sécurité (16, 17) par une deuxième ligne de défaut (34), le module logique de contrôle (15) étant aménagé pour transmettre l'état de service réel et/ou les deuxièmes signaux de capteurs (S1' à S5') au module logique de commande (14) et le module logique de commande (14) étant aménagé pour générer un signal de défaut (ERR 2) de logique de commande, si aucune transmission de signaux n'est effectuée par le module logique de contrôl (15) et le module logique de sécurité (16, 17) étant aménagé pour modifier les signaux de commande (TOP-PWM, BOT-PWM) sur la base du signal de défaut (ERR 2) de logique de commande, de sorte à permettre de stopper une alimentation de la machine avec une tension de service.

2. Convertisseur de courant (1) selon la revendication 1, le module logique de commande (14) étant aménagé pour transmettre l'état de service réel et/ou les premiers signaux de commande (S1 à S5) au module logique de contrôle (15), le module logique de contrôle (15) étant aménagé pour procéder à une comparaison entre les états de service réels et/ou des signaux de capteurs et pour générer le signal de défaut (ERR 1) de logique de contrôle, si l'état de service réel du module logique de commande (14) diffère de l'état de service réel du module logique de contrôle (15) et/ou si les premiers signaux de capteurs (S1 à S5) diffèrent des deuxièmes signaux de capteurs (S1' à S5').

3. Convertisseur de courant (1) selon la revendication 1 ou 2, lequel comprend un premier module logique de sécurité (16) pour des signaux de commande (TOP-PWM) des disjoncteurs TOP (7) et un deuxième module logique de sécurité (17) pour des signaux de commande (BOT-PWM) des disjoncteurs BOT (8) .

4. Convertisseur de courant (1) selon la revendication 3, dans lequel les deux modules logiques de sécurité (16, 17) sont connectés l'un avec l'autre.

5. Machine électrique dotée d'un convertisseur de courant (1) selon l'une quelconque des revendications 1 à 4, destinée à l'alimentation avec une tension de service.

6. Véhicule automobile doté d'un entraînement électrique ou hybride qui est équipé d'une machine électrique dotée d'un convertisseur de courant selon la revendication 5 en tant que machine d'entraînement.

7. Procédé destiné à faire fonctionner un convertisseur de courant (1) destiné à alimenter une machine électrique avec une tension de service, lequel comprend un ou plusieurs demi-ponts (3) avec des disjoncteurs (7, 8) pour générer des phases de courant alternatif, comportant les étapes suivantes :
- transmission d'un signal de requête (R) prédéfinissant un état de service de contrôle de la machine et de premiers signaux de capteurs (S1 à S5) à un module logique de commande (14),
- détermination par le module logique de commande (14) d'un état de service réel de la machine sur la base des premiers signaux de capteurs (S1 à S5),
- génération par le module logique de commande (14) de signaux de commande (TOP-PWM, BOT-PWM) pour les disjoncteurs (7, 8) sur la base de l'état de service réel, pour le réglage de l'état de service de consigne,
- transmission du signal de requête (R) et de deuxièmes signaux de capteurs (S1' à S5') à un module logique de contrôle (15),
- détermination d'un état de service réel de la machine sur la base des deuxièmes signaux de capteurs (S1' à S5'), après l'écoulement d'un temps d'attente prédéfinissable après la génération des signaux de commande (TOP-PWM, BOT-PWM),
- génération par le module logique de contrôle (15) d'un signal de défaut (ERR 1) de la logique de contrôle si l'état de service réel est différent de l'état de service de consigne,
- modification des signaux de commande (TOP-PWM, BOT-PWM) sur la base du signal de défaut (ERR 1) de logique de contrôle, de sorte à stopper une alimentation de la machine avec une tension de service,
- transmission par le module logique de contrôle (15) de l'état de service réel et/ou des deuxièmes signaux de capteurs (S1' à S5') au module logique de commande (14),
- génération par le module logique de commande (14) d'un signal de défaut (ERR 2) de logique de commande si aucune transmission de signaux n'est effectuée par le module logique de contrôle (15),
- modification des signaux de commande (TOP-PWM, BOT-PWM) sur la base du signal de défaut (ERR 2) de logique de commande, de sorte à stopper une alimentation de la machine avec une tension de service.

8. Procédé selon la revendication 7, lequel comporte les étapes suivantes :
- transmission depuis le module logique de commande (14) de l'état de service réel et/ou des premiers signaux de commande (S1 à S5) au module logique de contrôle (15),
- comparaison des états de service réels et/ou des premiers signaux de capteurs (S1 à S5) avec les deuxièmes signaux de capteurs (S1' à S5'),
- génération du signal de défaut (ERR 1) de logique de contrôle si les états de service réels sont différents les uns des autres et/ou si les premiers signaux de capteurs (S1 à S5) sont différents des deuxièmes signaux de capteurs (S1' à S5').

9. Procédé selon la revendication 7 ou 8, lequel comporte les étapes suivantes :
- transmission des signaux de commande (TOP-PWM, BOT-PWM) à au moins un module logique de sécurité (16, 17),
- transmission du signal de défaut (ERR 1, ERR 2) de logique de contrôle ou de logique de commande au module logique de sécurité (16, 17),
- modification des signaux de commande (TOP-PWM, BOT-PWM) sur la base du signal de défaut (ERR 1, ERR 2) de logique de contrôle ou de logique de commande dans le module logique de sécurité (16, 17).

10. Procédé selon la revendication 9, lequel comporte les étapes suivantes :
- transmission de signaux de commande (TOP-PWM) destinés à des disjoncteurs TOP (7) connectés sur un potentiel plus élevé (DC+) à un premier module logique de sécurité (16),
- transmission de signaux de commande (BOT-PWM) destinés à des disjoncteurs BOT (8) connectés sur un potentiel moins élevé (DC-) à un deuxième module logique de sécurité (17),
- transmission du signal de défaut (ERR 1, ERR 2) de logique de contrôle ou de logique de commande aux deux modules logiques de sécurité (16, 17),
- modification des signaux de commande (TOP-PWM) pour les disjoncteurs TOP (7) dans le premier module logique de sécurité (16), sur la base du signal de défaut (ERR 1, ERR 2) de logique de contrôle ou de logique de commande,
- modification des signaux de commande (BOT-PWM) pour les disjoncteurs BOT (8) dans le deuxième module logique de sécurité (17), sur la base du signal de défaut (ERR 1, ERR 2) de logique de contrôle ou de logique de commande.

11. Procédé selon l'une quelconque des revendications 7 à 10 lors duquel les signaux de commande (TOP-PWM, BOT-PWM) sont modifiés sur la base du signal de défaut (ERR 1, ERR 2) de logique de contrôle ou de logique de commande de telle sorte que
- tous les disjoncteurs (7, 8) soient coupés ou
- tous les disjoncteurs TOP (7) connectés sur un potentiel plus élevé (DC+) soient enclenchés et tous les disjoncteurs BOT (8) connectés sur un potentiel moins élevé (DC-) soient coupés ou
- tous les disjoncteurs TOP (7) connectés sur un potentiel plus élevé (DC+) soient coupés et tous les disjoncteurs BOT (8) connectés sur un potentiel moins élevé (DC-) soient enclenchés.

12. Procédé selon l'une quelconque des revendications 7 à 11, lors duquel les premiers signaux de capteurs (S1 à S5) sont générés par des capteurs, lesquels sont différents de capteurs qui génèrent les deuxièmes signaux de capteurs (S1' à S5')
